# EUROPEAN PATENT APPLICATION

(11) **EP 3 047 894 A1**
(43) Date of publication of application: **27.07.2016**
(21) Application number: 15181951.3
(22) Date of filing: 21.08.2015
(51) Int. Cl.: B01D 53/14, B01D 53/22, C01B 3/50, C01B 3/52, C10L 3/10

(54) **PROCESS FOR SEPARATING A GAS FROM A GASEOUS FEED STREAM BY A LIQUID ABSORBENT IN AN ABSORPTION- DESORPTION LOOP WITH MEMBRANE CONTACTORS**

(30) Priority: 21.01.2015 GB 201500989
(71) Applicant: Deng, Liyuan, 7037 Trondheim (NO)
(72) Inventor: Deng, Liyuan, 7037 Trondheim (NO)
(74) Representative: Gordon, Jennifer Claire

(57) **Abstract**

A process for separating at least one gas (e.g. at least one of CO₂, H₂S and/or NH₃) from a mixed gaseous feed stream, said process comprising (i) Passing said mixed gaseous feed stream through a first membrane contactor comprising a first membrane and a liquid absorbent at a first pressure, such that the liquid absorbent absorbs the at least one gas from the mixed gaseous feed stream to form a rich liquid absorbent; (ii) Feeding said rich liquid absorbent to a second membrane contactor comprising a second membrane at a second pressure; (iii) Desorbing said at least one gas (e.g. at least one of CO₂, H₂S and/or NH₃) from the rich liquid absorbent in the second membrane contactor; and (vi) Recirculating all or at least a part of the liquid absorbent from the second membrane contactor back to the first membrane.

## Description

This invention relates to a process for gas capture. In particular, it relates to a process for selectively separating at least one gas from a mixed gaseous feed stream, especially the separation of carbon dioxide (CO₂) from a feed stream which also comprises hydrogen (H₂) or methane (CH₄), the separation of hydrogen sulfide (H₂S) from a feed stream which also comprises CH₄, or the separation of ammonia (NH₃) from a feed stream which also comprises H₂. The invention also relates to an apparatus for use in the process.

### Background of the Invention

The increasingly serious climate situation caused by large CO₂ emissions from fossil fuel-derived energy production has become a critical societal challenge and has caused serious public concern in recent years. As a result, innovative solutions for CO₂ capture techniques are constantly sought and widely studied.

Significant progress has been achieved from three main CO₂ capture pathways, namely post-combustion, pre-combustion and oxy-fuel. Compared to the other two approaches, pre-combustion can be more economical and less energy intensive. In pre-combustion CO₂ capture, CO₂ is removed from syngas before the fuel (e.g. H₂) is burned. This process typically involves concentrating the CO₂ at a high CO₂ partial pressure, which increases the driving force for separation and largely reduces the energy consumption for compression. The size and cost of the pre-combustion capture facilities may also be lower than for other methods. However, achieving efficient separation of CO₂/H₂ before combustion is challenging, particularly in view of the relatively high operating temperature often required.

In pre-combustion processes, CO₂/H₂ separation is an important step to purify H₂ from the water-gas shift reaction products and hence avoid CO₂ emission into the atmosphere. The selective separation of CO₂ from H₂ at elevated temperatures is the key challenge for this process because the reaction is equilibrium limited and usually only occurs at appreciable rates at pressures in the range 15-20 bar and temperatures of around 190-210°C. Thus, there are many challenges associated with the development of practical separation techniques in pre-combustion CO₂ capture, which are compatible with these conditions.

The separation of other gases such as NH₃ or H₂S from mixed gaseous feed streams is also important for both environmental and economic reasons. For example, the separation and recovery of ammonia from ammonia plant purge gas can help to improve output efficiency in the ammonia production plant. Moreover, the presence of ammonia in the purge gas is often undesirable if this gas is to be utilised further. Conventional processes for NH₃ recovery are water wash and cryogenic separation.

Currently, CO₂/H₂ separation from syngas is usually carried out by absorption using Selexol as absorbent. Selexol is a physical solvent, which needs to be chilled with refrigeration for effective CO₂ absorption (Selexol feed at -5°C). Often, the separation is not efficient enough to generate H₂ of sufficient purity and recovery is poor. Moreover, the sweetened gas from the Selexol process needs to be further purified, e.g. using a PSA (pressure swing adsorption) process. Therefore, a CO₂ absorbent which functions well at elevated temperature and has better CO₂ sorption capacity is desirable to have a more energy efficient and economical CO₂/H₂ separation from syngas.

In a membrane absorption process, a gas-liquid membrane contactor is employed as a device that offers an effective gas-liquid mass transfer interface. In combination with the advantages of both absorption processes (high purity and recovery) and membrane separation, the membrane contactor is considered as a very efficient technique for separation. It requires a much smaller size and weight compared to other absorbers for the same productivity, and compared with conventional absorption processes it has fewer moving parts and offers a gas-liquid interface which can be up to 30 times higher. Membrane absorption processes also have the advantage of having a lower energy consumption than previously used methods.

WO 2012/096576 and US5281254 describe membrane absorption processes driven using pressure gradients across the membranes, where the membranes in this process must be non-porous and selective to gases over other components such as water and solvent vapours, otherwise the pressure gradients lead to wetting and/or bubbling problems, which can significantly reduce the separation efficiency of the process.

Traditional solvents for use in membrane absorption process include amine based solvents such as monoethanolamine and diethanolamine (see, for example US 5281254 and US 6228145). However, there are problems with these solvents which include their instability. They are also potentially quite harmful to the environment. As a result, traditional solvents are largely unsuitable for use in some applications, such as pre-combustion processes, where elevated temperatures are required.

The absorbent used in a membrane contactor process preferably has a unique balance of properties. These ideally include a low vapor pressure and being thermally stable. Having a high sorption capacity and selectivity for the desired gas(es), as well as a low viscosity under the operating conditions is also critical, especially when a hollow fiber membrane contactor is used. Since solvents for this application must have both high thermal stability and low vapor pressure, the use of conventional amine-based aqueous solvents as absorbents are not desirable for this application. There therefore remains a need to develop and identify new solvents for use in the membrane absorption process in gas capture.

Ionic liquids (ILs) are organic salts with a negligible vapor pressure and high thermal stability. Ionic Liquids (ILs) are also well- known as green solvents for absorption of gases including CO₂, H₂S and NH₃. In recent years ILs have become a research highlight as green and highly efficient solvents due to their unique properties: negligible volatility (no solvent loss or pollution, important for offshore or subsea), high CO₂, H₂S and NH₃ sorption capacity, good chemical/thermal stability and tuneable physical and chemical properties (e.g. viscosity and CO₂ affinity). For example, ILs exhibit high CO₂ solubility but only negligible H₂ solubility, with CO₂/H₂ selectivities of up to 300 being reported. The solubility of ILs for H₂S may be 2-3 times higher than that for CO₂. For example, at around 10 bar, [hmim][Tf2N] has a CO₂ sorption of 0.2 mol/mol and an H₂S sorption of 0.6 mol/mol, and the sorption capacities of both gases increase with the increasing gas pressure.

There are two categories of ionic liquids: physisorption ionic liquids and chemisorption ionic liquids. The gas sorption in chemisorption ionic liquids is believed to be dual mode: chemical sorption plus physical sorption, making the gas separation much more efficient and enabling the process to reach high production recovery and purity without further treatment. Ionic liquids also offer the advantage of being adaptable to specific processes and thus it is often possible to design the structure of the ionic liquids to have the desired reversible reaction with a gas under a particular set of conditions. Gas solubility in ILs shows a strong dependence on temperature and pressures, as do the viscosities of ILs.

In view of the above-mentioned challenges, it is an object of the present invention, to develop a new, more efficient method for gas capture, in particular for CO₂, H₂S and/or NH₃ capture from a mixed gaseous feed stream. A process which offers high separation efficiency of the desired gas(es) (e.g. CO₂, H₂S and/or NH₃) from the other components in the feed stream is sought. Ideally, the process should have negligible solvent loss and offer additional benefits such as being environmentally friendly and saving energy compared to currently used methods. It would be advantageous if the process avoided the problems associated with current membrane absorption processes, including wetting and /or bubbling. Ultimately, it is desired if the process is suitable for commercial applications.

It has surprisingly found that this may be achieved by utilising a continuous membrane absorption-desorption process using a liquid absorbent which typically has a negligible vapour pressure. Specifically, a new concept of the membrane absorption process has been developed using a pressure swing absorption-desorption loop. Unexpectedly, this closed cycle process is significantly more efficient and less energy intensive compared to conventional absorption processes. In some embodiments, the combination of temperature swing with pressure swing can further improve the separation efficiency, e.g. when low quality waste heat is available for use in the process. The present invention also offers the potential advantages of reduced corrosion caused by the absorbent and/or high temperatures.

### Summary of the invention

Thus, viewed from one aspect, the invention provides a process for separating at least one gas (e.g. at least one of CO₂, H₂S and/or NH₃) from a mixed gaseous feed stream, said process comprising:
(i) Passing said gaseous feed stream through a first membrane contactor comprising a first membrane and a liquid absorbent at a first pressure;
(ii) Feeding said liquid absorbent from the first membrane contactor to a second membrane contactor comprising a second membrane at a second pressure;
(iii) Desorbing said at least one gas (e.g. at least one of CO₂, H₂S and/or NH₃) from the liquid absorbent in the second membrane contactor; and
(iv) Recirculating all or at least part of the liquid absorbent from the second membrane contactor back to the first membrane contactor.

Viewed from a further aspect, the invention provides a process for separating at least one gas (e.g. at least one of CO₂, H₂S and/or NH₃) from a mixed gaseous feed stream, said process comprising:
(i) Passing said gaseous feed stream through a retentate side of a first membrane contactor comprising a liquid absorbent on a permeate side and a first membrane, at a first pressure;
(ii) Feeding said liquid absorbent from the permeate side of the first membrane contactor to a retentate side of a second membrane contactor comprising a second membrane, at a second pressure;
(iii) Desorbing said at least one gas (e.g. at least one of CO₂, H₂S and/or NH₃) from the liquid absorbent to a permeate side of the second membrane contactor; and
(iv) Recirculating all or at least part of the liquid absorbent from the retentate side of the second membrane contactor back to the permeate side of the first membrane contactor.

Viewed from a further aspect, the invention provides a process for separating at least one gas (e.g. at least one of CO₂, H₂S and/or NH₃) from a mixed gaseous feed stream, said process comprising:
(i) Passing said mixed gaseous feed stream through a first membrane contactor comprising a first membrane and a liquid absorbent at a first pressure, such that the liquid absorbent absorbs the at least one gas from the mixed gaseous feed stream to form a rich liquid absorbent;
(ii) Feeding said rich liquid absorbent to a second membrane contactor comprising a second membrane at a second pressure;
(iii) Desorbing said at least one gas (e.g. at least one of CO₂, H₂S and/or NH₃) from the rich liquid absorbent in the second membrane contactor; and
(iv) Recirculating all or at least a part of the liquid absorbent from the second membrane contactor back to the first membrane contactor.

Viewed from a further aspect, the invention provides a process for separating at least one gas (e.g. at least one of CO₂, H₂S and/or NH₃) from a mixed gaseous feed stream, said process comprising:
(i) Passing said mixed gaseous feed stream through a retentate side of a first membrane contactor comprising a liquid absorbent on a permeate side and a first membrane, at a first pressure, such that the liquid absorbent absorbs the at least one gas from the mixed gaseous feed stream to form a rich liquid absorbent;
(ii) Feeding said rich liquid absorbent from the permeate side of the first membrane contactor to a retentate side of a second membrane contactor comprising a second membrane, at a second pressure;
(iii) Desorbing said at least one gas (e.g. at least one of CO₂, H₂S and/or NH₃) from the rich liquid absorbent to a permeate side of the second membrane contactor; and
(v) Recirculating all or at least a part of the liquid absorbent from the retentate side of the second membrane contactor back to the permeate side of the first membrane contactor.

In a preferred aspect, the at least one gas is CO₂.

In an alternative preferred aspect, the at least one gas is NH₃.

In another alternative preferred aspect, the at least one gas is H₂S.

In another alternative preferred aspect, the at least one gas is H₂S and CO₂.

Viewed from an alternative aspect, the invention provides an apparatus arranged to perform the process as hereinbefore defined comprising:
a) A first membrane contactor comprising a retentate side and a permeate side and a first membrane which permits transport of at least one gas (e.g. at least one of CO₂, H₂S and/or NH₃) between the retentate side and the permeate side;
b) A second membrane contactor comprising a retentate side and a permeate side and a second membrane which permits transport of at least one gas (e.g. at least one of CO₂, H₂S and/or NH₃) between the retentate side and the permeate side;
wherein said apparatus is arranged such that the permeate side of the first membrane contactor is in fluid communication with the retentate side of the second membrane contactor so as to allow a liquid absorbent to flow from the first membrane contactor to the second membrane contactor and from the second membrane contactor to the first membrane contactor.

### Detailed Description of the Invention

The present invention describes a process for separating at least one gas (e.g. at least one of CO₂, H₂S and/or NH₃) from a mixed gaseous feed stream. The process utilises at least two membrane contactors, preferably connected in a closed cycle loop. The at least one gas (e.g. at least one of CO₂, H₂S and/or NH₃) is absorbed into the liquid absorbent in the first membrane contactor at a first pressure and is released from the absorbent in the second membrane contactor at a second pressure.

### Gaseous Feed Stream

The mixed gaseous feed stream used in the process of the invention may be any gas stream comprising a mixture of at least two gases.

In one embodiment of the invention, the feed stream is a mixture of at least two gases, wherein one of these gases is CO₂. In this context, the process is preferably utilised to separate the CO₂ from the gaseous feed stream, i.e. the at least one gas to be separated is CO₂. In a preferred embodiment, the feed stream comprises (e.g. consists of) hydrogen (H₂) and CO₂. In an alternative preferred embodiment, the feed stream comprises (e.g. consists of) methane (CH₄) and CO₂. In a further alternative embodiment, the feed stream comprises (e.g. consists of) nitrogen (N₂) and CO₂. In a further alternative embodiment, the feed stream comprises (e.g. consists of) methane (CH₄), hydrogen sulphide (H₂S) and CO₂ and in this embodiment the process may be used to simultaneously separate CO₂ and H₂S from the mixed gaseous feed stream.

The feed stream may comprise 5 to 90 vol%, preferably 10 to 85 vol%, more preferably 25-80 vol%, even more preferably 35-70 vol%, such as 40-60 vol% CO₂ relative to the total amount of gas present.

Typically, the feed stream will further comprise 10 to 90 vol%, preferably 25-80 vol%, more preferably 35-70 vol% H₂ relative to the total amount of gas present.

In one particular preferred embodiment, the feed stream comprises 5 to 50 vol% CO₂ relative to the total amount of gas present (e.g. when the feed stream comprises natural gas, or biogas).

It will be appreciated that in addition to the gases mentioned above, the gaseous feed stream may comprise further gases. Examples of such further gases include hydrogen, methane, nitrogen, carbon monoxide, hydrogen sulfide, hydrogen chloride, hydrogen fluoride, sulfur dioxide, carbonyl sulphide, ammonia, oxygen and heavy hydrocarbons such as hexane, octane or decane. In all embodiments, H₂S, if present, may be present in amounts of 0.1 to10 vol%, preferably 0.25 to 8 vol%, more preferably 0.5 to 5 vol%.

In a particularly preferred embodiment, the gaseous feed stream may comprise syngas, most preferably pre-combustion syngas, i.e. syngas which has yet to be combusted for power production. It will be understood that by "syngas" we mean a mixture comprising hydrogen and carbon monoxide in addition to carbon dioxide and other optional gases such as hydrogen sulfide.

Alternatively, in a further preferred embodiment, the gaseous feed stream may comprise biogas or natural gas, i.e. a mixture of gases comprising methane and carbon dioxide in addition to other optional gases such as hydrogen sulphide and carbon monoxide.

When the gaseous feed stream comprises biogas or natural gas, the process of the invention is primarily used to separated CO₂ and/or H₂S from CH₄. Natural gas is a combustible mixture formed primarily of methane, but it can also include sour gas carbon dioxide and hydrogen sulphide. The composition of natural gas can vary widely, but typically contains methane (70-90 vol%), ethane/butane (0-20 vol%), nitrogen (0-5 vol%) carbon dioxide (0-12 vol%) and hydrogen sulphide (0-5 vol%) before it is refined. CO₂ and/or H₂S in natural gas should ideally be removed (natural gas sweetening) to meet specifications in order to increase heating value (Wobbe index) and reduce corrosion of pipelines. Ideally, the CO₂ content should be reduced to < 2 vol%.

Biogas is a mixture of gases generated from anaerobic microbial digestion from organic wastes such as manure, landfill or sewage. The composition of biogas varies depending on the source. Typically biogas contains 60-65 vol% CH₄, 35-40 vol% CO₂, small amounts of hydrogen sulfide (H₂S), water vapour and traces of other gases. Depending on the source, nitrogen (N₂) may be present. The removal of carbon dioxide (CO₂) from biogas to a level of methane (CH₄) > 90 vol%, termed "upgrading", can not only effectively increase the Wobbe index, but also reduce corrosion caused by acid gas and therefore extend the biogas utilization as a renewable energy resource. Upgraded biogas containing at least 98 vol% of CH₄ may be compressed and liquefied for vehicle fuel or injected into a public natural gas grid.

In an alternative embodiment, gaseous feed stream is a mixture of at least two gases, wherein one of these gases is NH₃. In this context, the process is utilised to separate the NH₃ from the gaseous feed stream, i.e. the at least one gas to be separated is NH₃. In a preferred embodiment, the feed stream comprises (e.g. consists of) hydrogen (H₂) and NH₃.

The feed stream may comprise 0.5 to 55 vol%, preferably 0.75 to 40 vol%, more preferably 0.8 to 12 vol%, such as 1 to 4 vol% NH₃ relative to the total amount of gas present.

Typically, the feed stream will further comprise 20 to 70 vol%, preferably 40 to 68 vol%, more preferably 55-65 vol% H₂ relative to the total amount of gas present.

It will be appreciated that in this embodiment, in addition to NH₃ and H₂, the gaseous feed stream may comprise further gases. Examples of such further gases include nitrogen, methane, carbon monoxide, argon, xenon, krypton, hydrogen sulfide, hydrogen chloride, hydrogen fluoride, sulfur dioxide, carbonyl sulphide, oxygen and heavy hydrocarbons such as hexane, octane or decane.

In a preferred embodiment, the gaseous feed stream comprises ammonia plant purge gas, i.e. a mixture of gases comprising ammonia and hydrogen in addition to other optional gases such as nitrogen and methane. Ammonia plant purge gas is a combination of emission gas generated during production of ammonia (commonly a mixture of hydrogen, nitrogen and some inert gases vented to increase synthesis rate of ammonia) and storage tank gas (i.e. evaporated gases dissolved in ammonia under high pressure after depressurizing in the tank system). Approximately 180∼240m³ purge gas per ton of ammonia is usually produced. The purge gas typically comprises hydrogen (20-70 vol%), nitrogen (7-25 vol%), methane (7-18 vol%), Argon(3-8 vol%), ammonia(1-55 vol%), and small percentage of krypton and xenon. An example composition of an ammonia plant purge gas is: hydrogen (55-65 vol%), nitrogen (18-23 vol%), methane (8-18 vol%), Argon(3-5 vol%), ammonia(1-4 vol%). Within storage tank gas, ammonia content may be up to 40-55 vol%.

### Membrane contactor

The process of the invention utilises at least two membrane contactors. By "membrane contactor" we mean a device which achieves gas/liquid mass transfer without dispersion of one phase within another. It will be appreciated that membrane contactors exist which achieve liquid/liquid mass transfer, however such contactors are not within the ambit of the present invention.

A membrane contactor typically comprises two regions separated by a membrane interface. In the membrane contactors of the present invention, one region comprises gaseous components and the other, liquid. The two regions are often referred to as the "retentate" and "permeate" sides of the membrane, wherein the "retentate" comprises those components which have not passed though the membrane and the "permeate" side comprises those components which have passed through the membrane.

Typically, the process of invention will comprise two membrane contactors: a first membrane contactor as an absorber and a second membrane contactor as a desorber. It is also within the scope of the invention for the process to comprise a first group of membrane contactors, which together perform the role of absorbers, and a second group of membrane contactors, which together perform the role of desorbers. Thus, the process of the invention may comprise a group of more than one membrane contactors as absorbers and a group of more than one membrane contactors as desorbers.

The first membrane contactor comprises a first membrane and a liquid absorbent. The gaseous feed stream is passed into the first membrane contactor on the retentate side, preferably *via* an inlet. The liquid absorbent is on the permeate side. The purpose of the first membrane contactor is to separate the at least one gas (e.g. at least one of CO₂, H₂S and/or NH₃) from the gaseous feed stream. This is achieved by selective absorption of the CO₂ gas(es) (e.g. at least one of CO₂, H₂S and/or NH₃) through the membrane and into the liquid absorbent. The remaining components of the gaseous feed stream pass out of the first membrane contactor on the retentate side, preferably *via* an outlet. Some or all of these remaining components may be recycled back to the inlet for further separations. The liquid absorbent comprising absorbed gas (e.g. at least one of CO₂, H₂S and/or NH₃) is passed out of the first membrane contactor to the second membrane contactor. The liquid absorbent comprising the absorbed at least one gas from the first membrane contactor may be referred to as the "rich" liquid absorbent.

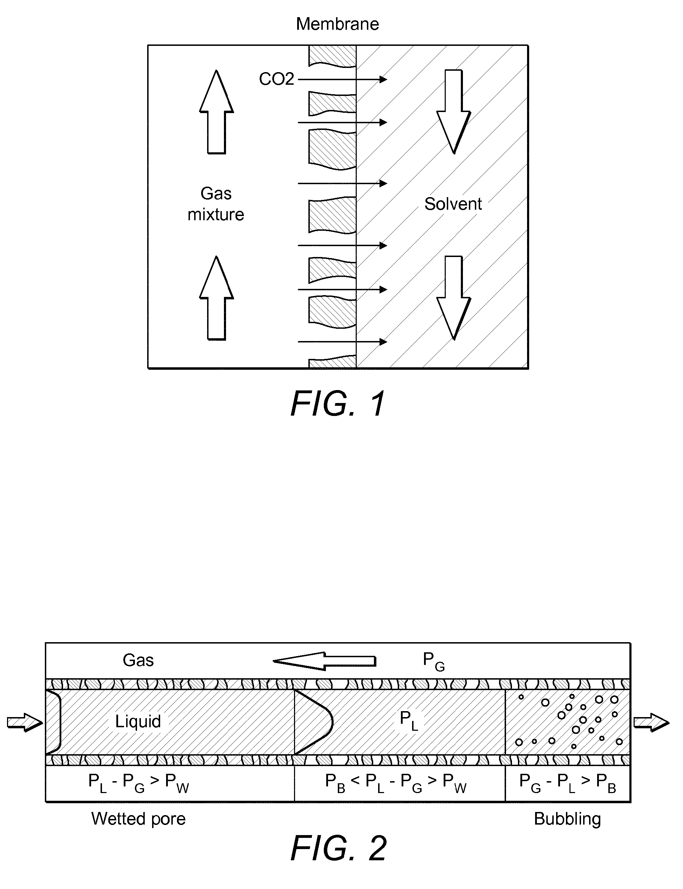

The first membrane contactor is usually configured such that the gaseous feed stream flows in the opposite direction to the liquid absorbent, i.e. the gaseous feed stream flows in a counter-current direction to the flow of the liquid absorbent. This helps to maximise absorption and the principle is illustrated in Figure 1. The direction of flow of the liquid absorbent may also be co-current or cross-flow, depending on the process conditions.

The first membrane contactor is operated at a first pressure. The first pressure will be understood to be one which is appropriate for the desired absorption of gas(es) (e.g. at least one of CO₂, H₂S and/or NH₃) into the liquid absorbent. The pressure may be at least 5 bar, preferably at least 10 bar, more preferably at least 20 bar. In some embodiments the pressure will be not more than 120 bar, preferably not more than 100 bar, more preferably not more than 80 bar. The temperature of the first membrane contactor may be in the range 25 to 300 °C, preferably 30 to 180 °C, such as 40 to 80 °C, e.g. 50 to 60 °C.

The second membrane contactor comprises a second membrane. The (rich) liquid absorbent comprising absorbed gas(es) (e.g. at least one of CO₂, H₂S and/or NH₃) is fed into the second membrane contactor on the retentate side of the second membrane, preferably *via* an inlet. The purpose of the second membrane contactor is to desorb the gas(es) (e.g. at least one of CO₂, H₂S and/or NH₃) from the liquid absorbent. The gas(es) (e.g. at least one of CO₂, H₂S and/or NH₃) desorbs from the liquid absorbent and passes through the membrane to the permeate side of the membrane. The at least one gas (e.g. at least one of CO₂, H₂S and/or NH₃) will then typically be recovered from the permeate side of the second membrane contactor. The liquid absorbent flows out of the second membrane contactor on the retentate side, preferably *via* an outlet. All or at least part of the liquid absorbent is recycled back to the permeate side of the first membrane contactor for further use as an absorbent.

The second membrane contactor is operated at a second pressure. The second pressure will be understood to be one which is appropriate for the desired desorption of the at least one gas (e.g. at least one of CO₂, H₂S and/or NH₃) from the liquid absorbent. The pressure may be at least 1 bar, preferably at least 2 bar, more preferably at least 3 bar. In some embodiments the pressure will be not more than 10 bar, preferably not more than 8 bar, more preferably not more than 5 bar. The temperature of the second membrane contactor may be in the range 25 to 300 °C, preferably 30 to 180 °C, such as 40 to 150 °C, e.g. 50 to 140 °C.

Typically, the pressure of the second membrane contactor is different to that of the first membrane contactor. Thus, the process may be considered a pressure swing process. In all embodiments, it is preferred if the pressure of the second membrane contactor is less than that of the first membrane contactor, i.e. the second pressure is lower than the first pressure. Typically, the second pressure is at least 5 bar, preferable at least 10 bar lower than the first pressure.

In the present invention, in each membrane contactor, it is preferable if there is no difference between the pressures on each side of the membrane, thus the pressure on the retentate side is the same as (balanced with) that on the permeate side. This helps to avoid pore wetting and bubbling (these effects are shown in Figure 2). As a result, many different types of membranes and membrane modules known in the art may be suitable for use in the present invention.

In an alternative embodiment, the pressure on the retentate (gas) side of the first membrane contactor may be higher or lower than that on the permeate (liquid) side, e.g. with a trans-membrane pressure difference of less than 3bar, preferably less than 2bar, for example less than 1bar, when liquid side pressure is higher, or less than 8bar, preferably less than 5bar, for example less than 3bar, when gas side pressure is higher.

In a further embodiment, the pressure on the retentate (liquid) side of the second membrane contactor may be higher than the permeate (gas) side, e.g. with a trans-membrane pressure difference of less than 3bar, preferably less than 2bar, for example less than 1bar.

In embodiments of the invention wherein the pressure on the retentate side of the first membrane contactor is different to that on the permeate side of the first membrane contactor, the first pressure is defined to be the pressure on the permeate side (i.e. the liquid side).

In embodiments of the invention wherein the pressure on the retentate side of the second membrane contactor is different to that on the permeate side of the second membrane contactor, the second pressure is defined to be the pressure on the retentate side (i.e. the liquid side).

It will be appreciated that the exact pressure difference utilised may be dependent on the properties of absorbent and membrane materials, such as surface tension and contact angle, as well as on the pore size and pore size distribution of the membrane, if a porous membrane is used. This has the advantage of helping to avoid wetting of the membrane, which occurs when absorbent molecules diffuse into the membrane, resulting in an increase in mass transfer resistance and undesirable swelling of the membrane material.

Issues relating to bubbling have a less significant impact upon the separation, compared to wetting, and by controlling the pressure difference, only a very small amount of bubbles can occur. Moreover, bubbling may be compensated for by adding an extra gas-liquid separator between the first and second membrane contactors to stabilize the gas-rich liquid absorbent stream. In such a separator, the at least one gas (e.g. at least one of CO₂, H₂S and/or NH₃) in the bubbles will be further absorbed into the liquid absorbent and other less soluble gases (e.g. H₂ or CH₄) will remain in gas phase and be released and collected as product.

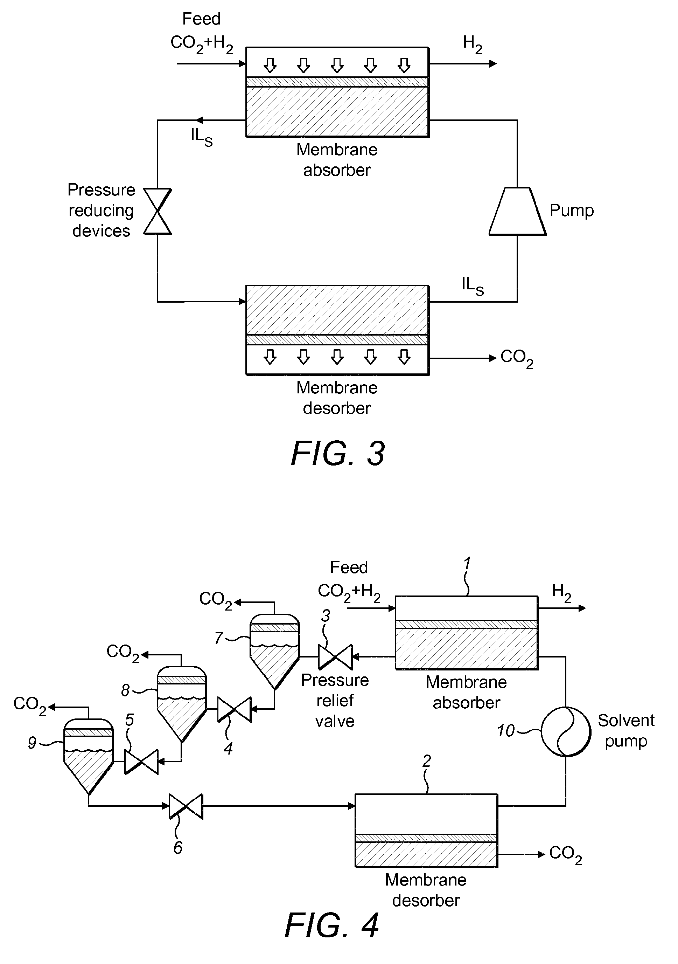

The first and second membrane contactors are typically arranged in a loop arrangement so as to provide a continuous process. Thus, the liquid absorbent flows between the membrane contactors in a closed cycle process. There will usually be a means of adjusting the pressure between each contactor, such as a pressure valve. Thus, the first and second pressures are typically controlled by pressure values external to the membrane contactor. A schematic diagram for the process of the invention is shown in Figure 3.

### Membrane

The membrane contactors used in the processes of the present invention each comprise a membrane. The membranes in each contactor will typically be the same, however it is possible for different membranes to be used, i.e. the membrane in the first membrane contactor may be the same or different to the membrane in the second membrane contactor.

Any suitable membrane can be used provided it enables the necessary mass transfer at the interface between the gas and liquid phases. The membrane may be porous or non-porous, typically porous. By "porous" we mean that the membrane contains pores. The pores are typically micropores, having a diameter of 2 nm or less, or mesopores, having a diameter of 2 to 100 nm. Preferably, the membrane contains mesopores. In a particularly preferred embodiment, the pores of the membrane have a diameter in the range 2-100 nm, such as 40 to 60 nm.

It is preferred if the membrane has a sharp or narrow pore size distribution, for example, at least more than 80% of the pores have the size 40-60nm, less than 10% of the pores have a size more than 60nm or less than 40nm, and less than 1% of the pores have a size more than 1µm or less than 10nm.

The membrane will also usually be hydrophobic, e.g. when hydrophilic absorbents are used.

Highly gas permeable non-porous membranes may also be used.

For a non-porous membrane, the non-porous layer of the membrane will preferably have a thickness of 1 to 2000 nm, more preferably 10-1000 nm, even more preferably 25-500 nm.

For a porous membrane, the membrane will preferably have a thickness of 1 to 500µm, more preferably 10-300µm, even more preferably 25-200µm, depending on the types of the membrane materials and fabrication techniques.

Typically, the membrane will have a packing density of 300 to 30000 m²/m³, preferably 1500 to 3000 m²/m³.

Many different types of membranes known in the art would be suitable for use in the present invention. Example membranes thus include ceramic membranes and porous glass membranes with modified hydrophobic surface and hydrophobic polymeric membranes, e.g. polypropylene (PP), polyethylene (PE), polycarbonate (PCTE), polyetetrafluoroethylene (PTFE) and polyvinylidene fluoride (PVDF), as well as other hydrophobic fluromembranes.

In all embodiments, the membrane is preferably non-selective for the at least one gas to be separated (e.g. at least one of CO₂, H₂S and/or NH₃). By "non-selective" we mean that the membrane does not allow only one gas to pass through it, but rather permits the passage of many different types of molecules. This has the advantage that the membranes have lower mass transfer resistance, and the membranes are generally cheaper than the more traditionally used selective membranes which are chosen to selectively allow the passage of only a single gas, e.g. only CO₂ or NH₃.

### Liquid Absorbent

The liquid absorbent used in the processes of the invention will typically be any solvent which has sorption capacity for the desired gas(es) to be separated (e.g. at least one of CO₂, H₂S and/or NH₃), is able to selectively absorb the desired gas(es) (e.g. at least one of CO₂, H₂S and/or NH₃) in the presence of other gases, such as CH₄ and/or H₂, and has negligible vapour pressure. By "negligible vapour pressure" we mean that the vapour pressure is typically less than 1 Pa at room temperature. Suitable solvents for use as the liquid absorbent include ionic liquids, ionic liquid based mixed solvent and low molecular weight polymers.

In a preferably embodiment, the liquid absorbent comprises (e.g. consists of) an ionic liquid (IL). Well known as "green" solvents, ionic liquids are promising absorbents for CO₂, H₂S and NH₃ due to their excellent properties, such as high sorption capacity, good thermal stability at high temperatures and negligible vapor pressure.

An "ionic liquid" (IL) within the context of the invention is an organic salt in the liquid state which stays as a liquid over a wide temperature range (e.g. -96 °C to 300 °C). This property may be due to the large size and asymmetry of the cation combined with resonance stabilized anions. One attractive feature of ILs is that IL's properties can be adjusted *via* chemical alteration of the cation and/or anion. In addition, many ILs are liquids with high coulombic forces constraining the IL constituents. Thus, the ILs exert practically no vapour pressure above the liquid surface. Moreover, the cation and/or anion can be functionalized, and the physical/chemical properties such as density, viscosity, hydrophobicity, and chemical affinity can be 'tuned' and targeted to a wide range of applications.

ILs normally show higher viscosity than aqueous solutions, which is a drawback in absorption processes. It is preferable if the ionic liquids used in the present invention have relatively low viscosity (e.g. less than 50mPa.S at the operating conditions of the process). Alternatively, co-solvents such as polyethylene glycol, may be added to reduce the overall viscosity of the ionic liquid absorbent.

In order to be suitable for use in the processes of the invention the liquid absorbent should be capable of selectively dissolving the gas(es) to be separated, (e.g. at least one of CO₂, H₂S and/or NH₃). Preferably, it is also capable of a reversible reaction with this gas(es), i.e. it is able to absorb the gas(es) (e.g. at least one of CO₂, H₂S and/or NH₃) under one set of conditions and desorb it under a second set of conditions. It is also desirable if the liquid absorbent is thermally stable at the temperatures employed in the process, chemically stable and selective for absorption of the gas(es) (e.g. at least one of CO₂, H₂S and/or NH₃) over other components in the mixed gaseous feed stream, such as H₂. Ideally, it should also have a low viscosity and low corrosion. In order to maximise the efficiency of the process, the liquid should have a high capacity for the desired gas(es) (e.g. at least one of CO₂, H₂S and/or NH₃) and a favourable stripping rate.

Ionic liquids are attractive not only because they satisfy many of these criteria, but also because they have designable properties which can be tuned by adjusting the structure and species of the anions and/or cations involved.

The ability of ionic liquids to absorb CO₂, H₂S and NH₃ is known and is thought to be the result of a combination of chemisorption and physisorption processes. This dual mechanism leads to a high absorption efficiency.

The ionic liquid used in the processes of the present invention may be chosen from any suitable ionic liquid known in the art. It will be appreciated that the ionic liquid comprises an organic salt. The organic salt comprises a cation and an anion.

Examples of cations include imidazolium, quaternary ammonium, phosphonium, alkanolamine, polyamine or pyridinium cations, such as 1-butyl-3-methylimidazolium, 1-allyl-3-methylimidazolium, 1,3-dimethylimidazolium, 1-ethyl-3-methylimidazolium, 1-octyl-3-methylimidazolium, 1-hexyl-3-methylimidazolium, 1-pentyl-3-methylimidazolium, butyl-trimethylammonium, 2-methylpyridinium, 1-propylamide-3-butyl imidazolium, trihexyl(tetradecyl)phosphonium, triethylene tetramine, diethylene triamine and trihexyl(tetradecyl)phosphonium.

The anion is thought to play a key role in determining the gas (e.g. CO₂) solubility of the ionic liquid. Examples of anions include nitrate, iodide, chloride, bromide, tetracyanoborate, dicyanamide, bis(fluorosulfonyl)imide, bistrifluoromethanesulfonylimide, tricyanomethanide, tetrafluoroborate, hexafluorophosphate, trifluoromethan sulfonate, bis(trifluoromethylsulfonyl)imide, 1-α-aminopropionic acid, aminoethanoic acid, prolinate and imidazole.

In one preferable embodiment, the cation is an imidazolium cation and the anion is selected from the group consisting of hexafluorophosphate, tricyanomethanide, chloride, bis(trifluoromethylsulfonyl)imide and tetrafluoroborate.

In a more preferable embodiment, the cation is an imidazolium cation and the anion is selected from the group consisting of hexafluorophosphate, chloride, bis(trifluoromethylsulfonyl)imide and tetrafluoroborate.

In a further embodiment, the liquid absorbent used in the process can also be a mixed solvent of an ionic liquid with at least one non-volatile co-solvent. Examples of co-solvents include polyethylene glycols(PEGs) and polyethylene glycol ethers, such as diethylene glycol monobutyl ether (DEGMBE), triethylene glycol monobutyl ether(TEGMBE, 307) and tetraethylene glycol dimethyl ether(TEGDME).

The ionic liquid in the mixed solvent preferably comprises at least one amine or amino moiety. The presence of these moieties is considered to enhance CO₂ solubility in the ionic liquid.

In all embodiments, particularly preferred ionic liquids include amino-acid ionic liquids which are typically prepared by reacting an amino acid with a typical ionic liquid cation or anion, such as any of those described above. Any amino acid may be used, however it is preferable if the amino acid is selected from the group consisting of glycine ([Gly]⁻), alanine ([Ala]⁻), proline ([Pro]⁻), leucine([Leu]⁻), phenylalanine([Phe]⁻), methionine([Met]⁻), serine([Ser]⁻), isoleucine([Ile]⁻), lysine([Lys]⁻), and threonine([Thr]⁻).

The most preferable amino acid ionic liquids are those which combine a tetrabutylphosphonium cation with an anion of glycine, alanine or proline.

The liquid absorbent used in the process can also be a low molecular weight polymer in liquid form. Examples of low molecular weight polymers include polyethylene glycol and polyethylenimine.

Preferably, the liquid absorbent (e.g. the ionic liquid) has a low content of water, i.e. comprises less than 5 wt%, preferably less than 3 wt%, more preferably less than 2 wt%, water relative to the total amount of liquid absorbent. Most preferably, The liquid absorbent is free of water. The presence of water is undesirable at levels above this because water in the absorbent may cause corrosion. Moreover, water evaporating in the desorber may reduce the purity of the product gas (e.g. H₂S, NH₃ and /or CO₂), and could lead to the requirement for an extra step post-treatment to remove the water, for example, by adding a condenser. However, the presence of water reduces the viscosity of the solvent, for example, up to 50% at 303K. Moreover, the evaporation of a small amount of water may enhance the stripping rate of the desorbed gas.

### Process

The processes of the invention are used to separate at least one gas (e.g. at least one of CO₂, H₂S and/or NH₃) from a mixed gaseous feed stream. Whilst it is within the ambit of the invention for more than one gas, e.g. two, gases to be separated, it is preferable if only one gas is separated. Particularly preferable gases which may be separated using the processes of the invention are CO₂, H₂S and/or NH₃. In one embodiment, CO₂ and H₂S may be simultaneously separated from a mixed gaseous feed stream by the process of the invention.

The processes according to the invention comprise at least two membrane contactors, which will usually be connected in a loop arrangement. The continuous nature of the process means that the liquid absorbent is recycled for repeated absorption/desorption steps. No evaporation of the absorbent is usually required to desorb the at least one gas (e.g. at least one of CO₂, H₂S and/or NH₃) which keeps the energy demands of the process low.

In all embodiments, it is preferred if the process of the invention results in the capture of at least 80%, more preferably at least 85%, even more preferably at least 90%, such as at least 95%, e.g. at least 99% of the desired at least one gas(es) (e.g. at least one of CO₂, H₂S and/or NH₃) present in the original gaseous feed stream.

The gaseous feed stream, on exit from the first membrane contactor, typically comprises less than 10 vol%, preferably less than 5 vol%, more preferably less than 2 vol%, such as less than 1 vol% of the at least one gas(es) to be separated (e.g. at least one of CO₂, H₂S and/or NH₃) relative to the total amount of gas present.

### Apparatus

The invention also comprises apparatus arranged to perform the processes as hereinbefore described. It will thus be appreciated that any of the preferable options discussed in the context of the process are equally applicable to the apparatus embodiments of the invention.

The apparatus of the invention comprises:
a) A first membrane contactor comprising a retentate side and a permeate side and a first membrane which permits transport of at least one gas between the retentate side and the permeate side;
b) A second membrane contactor comprising a retentate side and a permeate side and a second membrane which permits transport of at least one gas between the retentate side and the permeate side;
wherein said apparatus is arranged such that the permeate side of the first membrane contactor is in fluid communication with the retentate side of the second membrane contactor so as to allow a liquid absorbent to flow from the first membrane contactor to the second membrane contactor and from the second membrane contactor to the first membrane contactor.

The first and second membrane contactors, first and second membranes and liquid absorbent may be as defined above in the context of the process of the invention.

The fluid communication may be any suitable sealed connector such as a conduit, pipe or tube which is capable of withstanding the reaction conditions, e.g. the temperature and pressure used. It will be appreciated that the fluid communication will be suitable for the transport of the liquid absorbent between the first and second membrane contactors and *vice versa.* The fluid communication allows the liquid absorbent to flow from the first membrane contactor to the second membrane contactor and from the second membrane contactor to the first membrane contactor. Preferably the liquid absorbent flows in a cycle between the first membrane contactor and the second membrane contactor and back to the first membrane contactor and so on. Thus, it is preferable if the fluid communication provides a closed loop between the first and second membrane contactors within which the liquid absorbent can flow.

In all embodiments, the fluid communication may comprise one or more pressure valves or other similar pressure reducing devices. The purpose of the pressure valve(s) is to adjust the pressure of the liquid absorbent from the first pressure of the first membrane contactor to the second pressure of the second membrane contactor, or vice versa, so that its pressure matches that of the first or second membrane contactor, as appropriate.

Alternatively, the pressure may be adjusted using one or more flash tanks connected in series between one or more pressure reducing valves, as shown in Figure 4. CO₂ may be emitted and collected from each flash tank. Typically, where one or more flash tanks are employed between the first membrane contactor and the second membrane contactor, they operate at sequentially decreasing pressures. For example, three flash tanks may be connected in series and operate at 15bar, 10bar and 5 bar, respectively, with an outlet pressure at less than 2bar into the second membrane contactor. In this embodiment, the pressure of the second membrane contactor may be near atmospheric pressure.

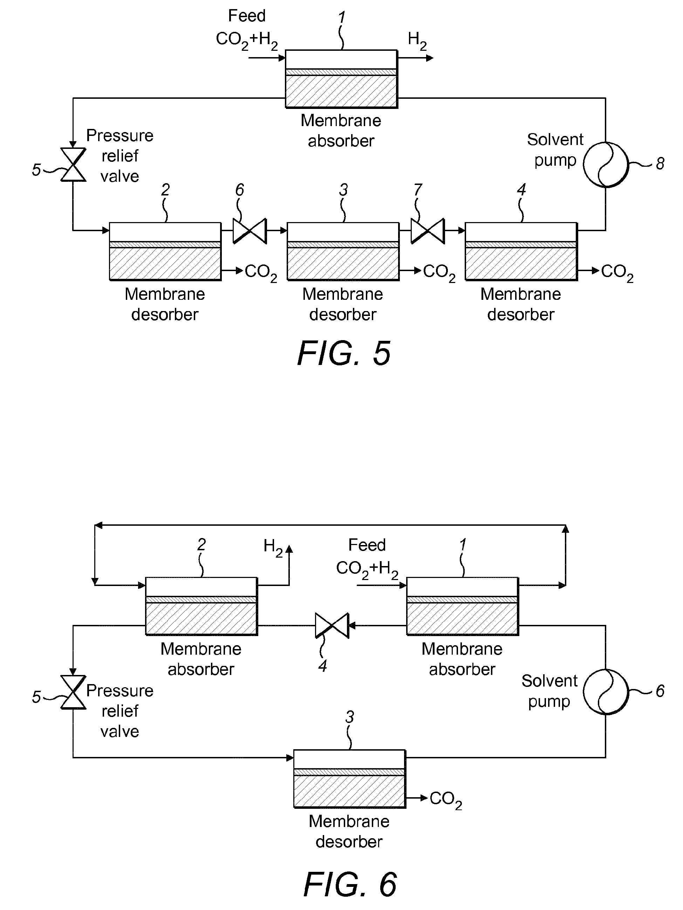

Another alternative may be to use a group of more than one membrane contactors connected in series and/or in parallel which act as desorbers (e.g. as shown in Figure 5). Typically, each desorber operates at a pressure lower than the previous desorber in the series. For example, three desorbers may be connected and operate at a decreasing pressures of 15bar, 10bar, and less than 2 bar, respectively. The pressure on the permeate side of each membrane contactor may be controlled to be similar to the pressure on the retentate side to avoid pore wetting. Several membrane contactors in parallel may act as desorbers when the separation capacity is large.

The apparatus of invention may also comprise a group of more than one membrane contactors in series and/or in parallel as the membrane absorber. To use several membrane contactors in series may avoid a sharp gas pressure drop along the membrane caused by the decrease of the CO₂ partial pressures (an example is shown in Figure 6). For example when membrane has a pore size of 50nm, two membrane contactors in series may be used when the partial pressure drop in the mixed gaseous stream is more than 5bar, such as a gaseous feed stream comprising 45% CO₂ in a CO₂/H₂ mixture at 20bar. In this embodiment, the first membrane contactor may capture a portion (e.g. 40%) of the total amount of CO₂ with a CO₂ partial pressure drop of 3.6bar, and the second membrane contactor may capture a second portion (e.g. up to 90%) of the remaining CO₂ with a CO₂ partial pressure drop of 4bar. Several membrane contactors in parallel may act as absorbers when the separation capacity is large.

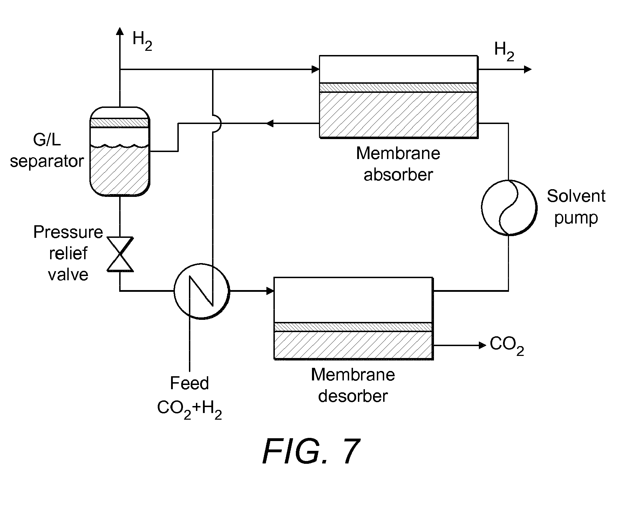

The apparatus of the invention may also comprise a gas-liquid separator between the first and second membrane contactors. Typically, the gas-liquid separator will be posited between the first membrane contactor and any pressure valve or other similar device used to adjust the pressure of the liquid absorbent from the first pressure to the second pressure. The presence of the gas-liquid separator helps to release any H₂, CH₄ or other gas trapped within bubbles in the liquid absorbent from the liquid, thus improving the efficiency of separation and increasing the recovery of these other gases, as shown in Figure 7, where "CO₂" represents the gases to be captured in this invention. This figure also shows a heat exchanger between feed gas and rich liquid absorbent, which gives an option to use existing or waste heat in the process for a mild temperature swing in addition to the pressure swing desorption.

### Description of Figures

**Figure 1****:** Schematic illustration of a membrane absorption process. The figure shows a counter-current arrangement in which the direction of flow of the feed stream is opposite to that of the absorbent.
**Figure 2****:** Pore wetting and bubbling in membrane contactor. The figure shows the pore wetting and bubbling phenomena and the ranges of trans-membrane pressure differences causing the phenomena.
**Figure 3****:** Schematic illustration of an embodiment of the invention, where "ILs" represents any chosen absorbent and "CO₂" represents the gas(es) to be captured.
**Figure 4****:** Schematic illustration of an embodiment of the invention with a series of flash tanks, where "1" is membrane absorber, "2" is membrane desorber, "3-6" pressure relief valves, "7-9" flash tanks, "10" pump and "CO₂" represents the gas(es) to be captured.
**Figure 5****:** Schematic illustration of an embodiment of the invention with multi-stage membrane desorbers, where "1" is membrane absorber, "2-4" are membrane desorber, "5-7" pressure relief valves, "8" pump and "CO₂" represents the gas(es) to be captured.
**Figure 6****:** Schematic illustration of an embodiment of the invention with multi-stage membrane absorbers, where "1- 2" are membrane absorber, "3" is membrane desorber, "4-5" pressure relief valves, "6" pump and "CO₂" represents the gas(es) to be captured.
**Figure 7****:** Schematic illustration of an embodiment of the invention with a gas-liquid separator, where "CO₂" represents the gas(es) to be captured.

### Examples

### 1. CO₂/H₂ separation

Based on simulation using a tubular porous glass tubular membrane and [Bmim][Tf2N] as absorbent at 20bar, T=353K and 45% CO₂ in feed, when liquid flow rate is 100ml/min, membrane length=300mm, membrane diameter=5mm, and porosity=0.56, membrane thickness 0.2mm, then approx. 80% of CO₂ can be captured at gas flow rate 100ml/min and 92% captured at gas flow rate 20ml/min. The efficiency can be further increased by increasing the gas-liquid contacting area, e.g. by using modules with higher membrane packing density.

### 2. CO₂/CH₄ separation

Based on simulation using a tubular porous glass membrane and [P66614] [Pro] blended in polyethylene glycol (PEG) as absorbent (30 wt% [P66614][Pro] in PEG) at 10 bar, T=298K and 12% CO₂ in feed, when liquid flow rate is 100ml/min, membrane length=300mm, membrane diameter=5mm, and porosity=0.56, membrane thickness 0.2mm, then approx. 85% of CO₂ can be captured at gas flow rate 500ml/min, and 99% CO₂ captured at gas flow rate 100ml/min. The efficiency can be further increased by increasing the gas-liquid contacting area, e.g. by using modules with higher membrane packing density.

### 3. NH₃ recovery from mixture contain H₂ and N₂.

Based on simulation using a tubular porous glass membrane and [BMIM][BF4] as absorbent at 10 bar, T=303K and 12% NH₃ in feed, when liquid flow rate is 100ml/min, membrane length=300mm, membrane diameter=5mm, and porosity=0.56, membrane thickness 0.2mm, then approx. 92% of NH₃ can be captured at gas flow rate 200ml/min, and 95% NH₃ captured at gas flow rate 50ml/min. The efficiency can be further increased by increasing the gas-liquid contacting area, e.g. by using modules with higher membrane packing density.

## Claims

1. A process for separating at least one gas (e.g. at least one of CO₂, H₂S and/or NH₃) from a mixed gaseous feed stream, said process comprising:
(i) Passing said mixed gaseous feed stream through a first membrane contactor comprising a first membrane and a liquid absorbent at a first pressure, such that the liquid absorbent absorbs the at least one gas from the mixed gaseous feed stream to form a rich liquid absorbent;
(ii) Feeding said rich liquid absorbent to a second membrane contactor comprising a second membrane at a second pressure;
(iii)Desorbing said at least one gas (e.g. at least one of CO₂, H₂S and/or NH₃) from the rich liquid absorbent in the second membrane contactor; and
(vi)Recirculating all or at least a part of the liquid absorbent from the second membrane contactor back to the first membrane contactor.

2. The process as claimed in claim 1, wherein said gaseous feed stream comprises CO₂ and H₂ and wherein said at least one gas is CO₂; or
wherein said gaseous feed stream comprises CO₂ and CH₄ and wherein said at least one gas is CO₂; or
wherein said gaseous feed stream comprises H₂S, CO₂ and CH₄ and wherein said at least one gas is H₂S and CO₂.

3. The process of claim 1 or 2 wherein said gaseous feed stream comprises 5 to 90 vol% CO₂, relative to the total amount of gas.

4. The process as claimed in claim 1, wherein said gaseous feed stream comprises NH₃ and H₂ and wherein said at least one gas is NH₃.

5. The process of claim 1 or 4, wherein said gaseous feed stream comprises 0.5 to 55 vol% NH₃ relative to the total amount of gas.

6. The process as claimed in any of claims 1 to 5, wherein said process is a closed cycle process.

7. The process of any of claims 1 to 6, wherein the pressure on the retentate side of the first membrane is the same as the pressure on the permeate side of the first membrane, or wherein the pressure of the retentate side of the first membrane is lower than the pressure on the permeate side of the first membrane, or wherein the pressure on the retentate side of the first membrane is higher than the pressure on the permeate side of the first membrane.

8. The process of any of claims 1 to 7, wherein the pressure on the retentate side of the second membrane is the same as the pressure on the permeate side of the second membrane, or wherein the pressure of the retentate of the second membrane contactor is higher than the pressure on the permeate side of the second membrane.

9. The process of claim 8 wherein, when the pressure of the retentate of the second membrane contactor is higher than the pressure on the permeate side of the second membrane, the transmembrane pressure difference is less than 3 bar, preferably less than 2 bar, most preferably less than 1 bar.

10. The process of any of claims 1 to 9, wherein the first and/or the second membrane is porous, preferably mesoporous.

11. The process of any of claims 1 to 10, wherein the membrane is non-selective.

12. The process of any of claims 1 to 11, wherein the liquid absorbent comprises (e.g. consists of) an ionic liquid.

13. The process of any of claims 1 to 12, wherein the second pressure is lower than the first pressure.

14. The process of any of claims 1 to 13, wherein the first pressure is at least 5 bar and/or wherein the second pressure is at least 1 bar.

15. Apparatus arranged to perform the process as defined in any of claims 1 to 14 comprising:
a) A first membrane contactor comprising a retentate side and a permeate side and a first membrane which permits transport of at least one gas between the retentate side and the permeate side;
b) A second membrane contactor comprising a retentate side and a permeate side and a second membrane which permits transport of at least one gas between the retentate side and the permeate side;
wherein said apparatus is arranged such that the permeate side of the first membrane contactor is in fluid communication with the retentate side of the second membrane contactor so as to allow a liquid absorbent to flow from the first membrane contactor to the second membrane contactor and from the second membrane contactor to the first membrane contactor.
